(19) Europäisches Patentamt / European Patent Office / Office européen des brevets

(11) **EP 2 860 283 B1**

(12) **EUROPEAN PATENT SPECIFICATION**

(45) Date of publication and mention
of the grant of the patent:
**05.04.2017 Bulletin 2017/14**

(21) Application number: **14188279.5**

(22) Date of filing: **09.10.2014**

(51) Int Cl.:
*C23C 24/00* (2006.01)    *C23C 26/00* (2006.01)
*C23D 5/02* (2006.01)    *F01N 13/00* (2010.01)
*F01N 13/14* (2010.01)    *C03C 8/14* (2006.01)
*C23D 5/00* (2006.01)    *C03C 8/20* (2006.01)
*C08K 3/22* (2006.01)    *C09D 101/28* (2006.01)
*C08K 3/38* (2006.01)    *F01N 13/08* (2010.01)

(54) **Structure**

Struktur

Structure

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **10.10.2013 JP 2013213252**

(43) Date of publication of application:
**15.04.2015 Bulletin 2015/16**

(73) Proprietor: **Ibiden Co., Ltd.
Ogaki-shi
Gifu 503-8604 (JP)**

(72) Inventors:
• **Mutsuda, Fumiyuki**
  Gifu, 501-0695 (JP)
• **Fujita, Yoshitaka**
  Gifu, 501-0695 (JP)

(74) Representative: **Hoffmann Eitle
Patent- und Rechtsanwälte PartmbB
Arabellastraße 30
81925 München (DE)**

(56) References cited:
**EP-A1- 2 213 856      EP-A1- 2 474 719
WO-A2-2010/008577      US-A1- 2001 009 692**

**Description**

TECHNICAL FIELD

The present invention relates to a structure.

BACKGROUND ART

A catalytic converter is provided in the path of an exhaust pipe to treat toxic substances contained in exhaust gas discharged from an engine.
It is necessary to maintain the temperatures of exhaust gas, an exhaust pipe through which the exhaust gas passes, and the like at temperatures suitable for catalytic activation (hereinafter, also referred to as catalyst activation temperatures) in order to improve conversion efficiency of toxic substances by a catalytic converter.
In a conventional exhaust gas purifying system, the temperature of the catalytic converter at the start of the engine is lower than the catalyst activation temperature, and thus the catalyst fails to provide its functions. It has therefore been difficult to completely prevent toxic substances from being discharged at the start of the engine.
For this reason, it is required to raise the temperature of an exhaust pipe connected to an engine to the catalyst activation temperature in a short time after the start of the engine.
Patent Literatures 1 to 3 each deal with the above problem by providing a structure that includes a base made of a metal and an inorganic material surface layer made of crystalline and amorphous inorganic materials. The inorganic material surface layer has lower heat conductivity than the base but has a higher infrared radiation rate than the base.

CITATION LIST

Patent Literature

Patent Literature 1: JP 2008-69383 A
Patent Literature 2: JP 2009-133213 A
Patent Literature 3: JP 2009-133214 A

EP 2 474 719 A1 discloses an exhaust gas purification device comprising a honeycomb structure in a cylindrical metallic member having an insulating layer including a glass layer and a mixed layer which includes an amorphous binder and a crystalline metal oxide.

SUMMARY OF INVENTION

Technical Problem

The exhaust pipe described above has bumps such as weld beads and weld spatters which are formed during welding. If part of the exhaust pipe is a double pipe, the double pipe has an edge portion at an end of the exhaust pipe present partly on its inner side or outer side.
In the case of forming the surface coat layer suggested in any of Patent Literature documents 1 to 3 on such an exhaust pipe having bumps and edge portions, the coating layer that is heated and molten has a low viscosity on the bumps and the edge portions, whereby the molten coating layer tends to flow from the bumps or the edge portions to other portions, and thus fails to form a coating film with a sufficient thickness. As a result, the bumps and the edge portions have a thin surface coat layer, or in some cases, have non-coated part. Thus, the bumps and the edge portions cannot provide sufficient properties including heat insulation properties. On the other hand, if the viscosity of the molten coat layer is increased for increasing the thickness of the surface coat layer, the resulting layer is less likely to have a uniform thickness as a whole.
The present invention has been made to solve these problems, and aims to provide a structure including a surface coat layer of which the thickness on a bump such as a weld bead and a weld spatter or an edge portion caused by a double pipe structure, possibly formed on the surface of a base, is not greatly different from the thickness on a flat portion. The structure therefore has excellent properties including heat insulation properties.

Solution to Problem

In order to achieve the above aim, the structure of the present invention features a base that is made of a metal and has a flat portion and at least one of a bump and an edge portion on a surface; and
a surface coat layer covering the surface of the base,
the surface coat layer including a first surface coat layer covering the flat portion and a second surface coat layer covering the at least one of a bump and an edge portion,
the first surface coat layer and the second surface coat layer being formed from an amorphous inorganic material and particles of a crystalline inorganic material,
the particles of the crystalline inorganic material in the second surface coat layer having an average particle size smaller than the particles of the crystalline inorganic material in the first surface coat layer, the crystalline inorganic material, the amorphous inorganic material and the bump are further defined in the claims.
The average particle size of particles of a crystalline inorganic material herein is the average particle size of particles of a crystalline inorganic material measured with Laser Diffraction Particle Size Analyzer (SALD-300V) from Shimadzu Corporation before mixing of the particles with the materials for forming a surface coat layer.
Hereinafter, a simple expression of "surface coat layer" refers to a surface coat layer including both the first surface coat layer and the second surface coat layer.
The percentage by weight of the particles of the crystalline inorganic material in the second surface coat layer is calculated from the following formula (1) using the particles of the crystalline inorganic material and the amorphous inorganic material constituting the second surface coat layer.

```
[Weight of particles of crystalline inorganic
material/(weight of particles of crystalline inorganic
material + weight of amorphous inorganic material)] × 100
…… (1)
```

The percentage by weight of the particles of the crystalline inorganic material in the first surface coat layer is, as in the case of the second surface coat layer, calculated from the following formula (1) using the particles of the crystalline inorganic material and the amorphous inorganic material constituting the first surface coat layer.
The structure of the present invention includes a base and a surface coat layer that is formed from an amorphous inorganic material and particles of a crystalline inorganic material, the surface coat layer includes a first surface coat layer covering a flat portion and a second surface coat layer covering at least one of a bump and an edge portion (hereinafter, also simply referred to as a portion such as a bump), and the particles of the crystalline inorganic material in the second surface coat layer have an average particle size smaller than the particles of the crystalline inorganic material in the first surface coat layer. Thus, the crystalline inorganic material has a larger contact area to the amorphous inorganic material in the molten state in a paint composition for forming the second surface coat layer than in a paint composition for forming the first surface coat layer. As a result, when the paint compositions are molten, the paint composition for forming the second surface coat layer has a higher flow resistance than the paint composition for forming the first surface coat layer. Thus, the molten paint, which is applied to a portion such as a bump to form a coating layer that is heated into a second surface coat layer, has a high viscosity. Thereby, the portion such as a bump can be coated with a second surface coat layer having a sufficient thickness that is not greatly different from the thickness of the first surface coat layer formed on the flat portion. As a result, the whole structure of the present invention can provide excellent properties including heat insulation properties and electrical insulation properties.
If the paint composition for forming the first surface coat layer is applied to the portion such as a bump without any modification, the resulting melt layer has an insufficient viscosity. Thus, the portion such as a bump has a thin surface coat layer or non-coated part, and thereby has poor properties including heat insulation properties.
Hereinafter, a melt layer refers to a melt layer formed by mixing particles of an amorphous inorganic material and particles of a crystalline inorganic material to prepare a paint composition, applying the paint composition to the surface of a base, and heating the composition.
The bump herein is, in a cross section perpendicular to the base surface, a part surrounded by a base surface line and a virtual surface line in a region where the base surface line and the virtual surface line are different from one another.
The thickness of the second surface coat layer on bumps is determined by drawing a perpendicular line to a tangent line of each tangent point on the base surface line defining each bump; randomly selecting 10 perpendicular lines each including a line segment that is bounded by the corresponding tangent point and a point on the surface of the structure and crosses only the second surface coat layer; and averaging the lengths of the 10 line segments included by the perpendicular lines. In the case of measurement using DUALSCOPE MP40 from Fischer Instruments K.K., for example, the thickness is determined by calibrating the thickness based on readings at any 30 points, measuring the thickness at 10 points, and averaging the readings at those points. For the measurement of the thickness at 10 points, the 10 points are preferably randomly selected without concentration of measurement points within the measurement region. For example, the measurement can be performed at equal intervals of 1 mm.

Here, the base surface line is a line actually forming the surface of the base in a cross section perpendicular to the base surface. The virtual surface line is a line drawn by extending the base surface line of the flat portions in a cross section perpendicular to the base surface.

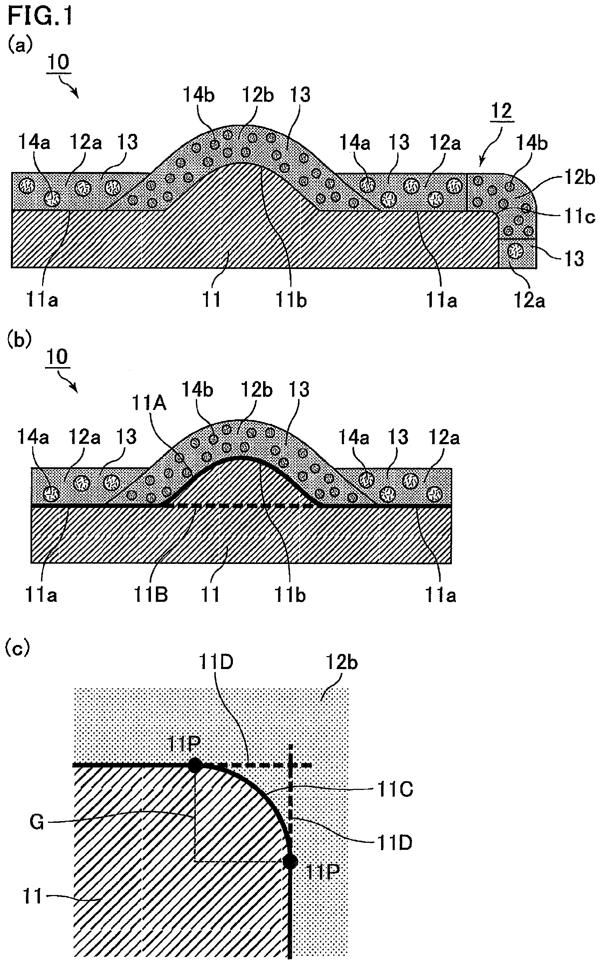

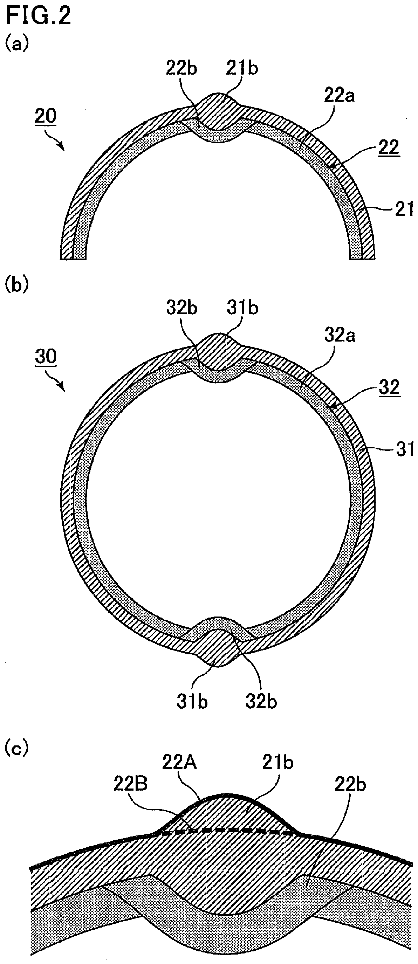

That is, the bump herein is, in an enlarged cross-sectional view of the vicinity of a bump in a structure as illustrated in Fig. 1(b) or an enlarged cross-sectional view of the vicinity of a bump in a half-cut member as illustrated in Fig. 2(c), a part surrounded by a base surface line 11A and a virtual surface line 11B or by a base surface line 22A and a virtual surface line 22B in a region where the base surface lines 11A and 22B are different from the respective corresponding virtual surface lines 11B and 22B.

Also, the edge portion herein is, in a cross section perpendicular to the base surface, a part surrounded by an edge portion surface segment formed by a base surface line in a region where the base surface line and virtual surface lines are different from one another except for bumps, and perpendicular lines which are perpendicular to the respective tangent lines at the end points of the edge portion surface segment on the base surface line.

That is, the edge portion herein is, in an enlarged cross-sectional view of the vicinity of an edge portion of a structure as illustrated in Fig. 1(c), a part surrounded by an edge portion surface segment formed by a base surface line 11C in a region where the base surface line 11C and virtual surface lines 11D are different from one another, and perpendicular lines G which are perpendicular to the respective tangent lines at points 11P (end points) of the edge portion surface segment on the base surface line 11C.

The thickness of the second surface coat layer on an edge portion is determined by drawing perpendicular lines to tangent lines of 10 randomly selected tangent points on the base surface line, and averaging the lengths of line segments which are included in the perpendicular lines and are bounded by the respective corresponding tangent points and points on the surface of the structure. In the case of measurement using DUALSCOPE MP40 from Fischer Instruments K.K., for example, the thickness is determined by calibrating the thickness based on readings at any 30 points, measuring the thickness at 10 points, and averaging the readings at those points.

For the measurement of the thickness at 10 points, the 10 points are preferably randomly selected without concentration of measurement points within the measurement region. For example, the measurement can be performed at equal intervals of 1 mm.

In the structure of the present invention, the particles of the crystalline inorganic material in the second surface coat layer have an average particle size of from 0.1 to 50 $\mu$m, and the particles of the crystalline inorganic material in the first surface coat layer have an average particle size of from 1 to 51 $\mu$m.

In the structure of the present invention, if the average particle size of the particles of the crystalline inorganic material in the second surface coat layer is 0.1 to 50 $\mu$m and is smaller than that in the first surface coat layer, the following can be achieved. That is, when a paint composition is applied to a portion such as a bump to form a coating layer that is heated into a second surface coat layer, the coating layer in the molten state has a high viscosity and the portion such as a bump can be entirely coated with the second surface coat layer having a sufficient thickness that is at least not greatly different from the thickness of the first surface coat layer formed on a flat portion.

The particles of the crystalline inorganic material contained in the second surface coat layer preferably have an average particle size of from 0.1 to 10 $\mu$m.

If the average particle size of the particles of the crystalline inorganic material in the second surface coat layer is from 0.1 to 10 $\mu$m, the contact area of the crystalline inorganic material to the amorphous inorganic material in the molten state is larger, and the viscosity of the melt layer is increased. Hence, a surface coat layer having a larger thickness can be formed on a portion such as a bump.

The crystalline inorganic material constitutes preferably from 5% by weight to less than 20% by weight in the second surface coat layer.

If the crystalline inorganic material constitutes from 5% by weight to less than 20% by weight in the second surface coat layer, the amount of the amorphous inorganic material per unit volume is in an appropriate range and the collision probability of particles of the crystalline inorganic material is reduced. Thus, the crystalline inorganic material is less likely to coagulate, tends to have an improved dispersibility, and tends to form a uniform film. Thus, a surface coat layer excellent in high-temperature strength, heat insulation properties, and electrical insulation performance can be formed.

The percentage by weight of the particles of the crystalline inorganic material in the second surface coat layer is calculated from the following formula (1) using the particles of the crystalline inorganic material and the amorphous inorganic material constituting the second surface coat layer.

[Weight of particles of crystalline inorganic
material/(weight of particles of crystalline inorganic
material + weight of amorphous inorganic material)] × 100
…… (1)

The percentage by weight of the particles of the crystalline inorganic material in the first surface coat layer is also calculated from the following formula (1) using the particles of the crystalline inorganic material and the amorphous inorganic material constituting the first surface coat layer.

In the structure of the present invention, the crystalline inorganic material contains at least one selected from the group consisting of calcia, magnesia, ceria, alumina, and an oxide of a transition metal.

If the surface coat layer of the structure of the present invention contains any of the above compounds as the crystalline inorganic material, generation of defects such as cracks due to deterioration of the mechanical strength of the surface coat layer can be prevented because particles of the crystalline inorganic material have excellent heat resistance and mechanically strengthen the surface coat layer. Especially, using an oxide of aluminum contributes to improvement of the electrical insulation properties of an exhaust pipe.

Also, if the surface coat layer contains an oxide of a transition metal as the crystalline inorganic material, the oxide of a transition metal, having a high infrared emissivity, gives a high infrared emissivity to the surface coat layer, and also contributes to excellent adhesion of the surface coat layer to the base.

In the structure of the present invention, the crystalline inorganic material preferably contains at least one selected from the group consisting of α-alumina and yttria-stabilized zirconia.

If the surface coat layer contains any of the above compounds as the crystalline inorganic material, the compound gives better heat resistance, mechanically strengthens the surface coat layer, and contributes to improvement of the electrical insulation properties of the structure.

In the structure of the present invention, the amorphous inorganic material contains low melting glass that has a softening point of from 300°C to 1000°C.

If the amorphous inorganic material in the structure of the present invention contains low melting glass that has a softening point of from 300°C to 1000°C, the surface coat layer can be relatively easily formed by forming a coating layer on the surface of the base by coating or the like method, and heating the coating layer.

If the low melting glass has a softening point of lower than 300°C which is excessively low as a softening point, the layer for forming the surface coat layer under heat is molten, for example, to easily flow to make it difficult to form a layer with a uniform thickness. In contrast, if the low melting glass has a softening point of higher than 1000°C, it is necessary to set the temperature for the heating at a very high temperature, and the heating may deteriorate the mechanical properties of the base. Also in this case, the surface coat layer containing an amorphous inorganic material may not be able to conform to the thermal expansion of the base due to the high temperature, and thus cracks may form in the surface coat layer to lead to peeling of the layer.

In the structure of the present invention, the low melting glass preferably contains at least one of barium glass, boron glass, strontium glass, alumina-silica glass, soda zinc glass, and soda barium glass.

If the low melting glass containing any of the above materials is used as the amorphous inorganic material in the structure of the present invention, a surface coat layer having heat resistance, durability, electrical insulation properties, and low heat conductivity can be formed on the surface of the base.

In the structure of the present invention, a bump is formed by at least one of a weld bead and a weld spatter.

In the structure of the present invention, such bumps may be coated with a second surface coat layer, which has a uniform thickness that is similar to the thickness of the first surface coat layer. As a result, the whole structure can achieve the effects of the present invention, namely excellent properties including heat insulation properties and electrical insulation properties.

In the structure of the present invention, the thickness ratio of the second surface coat layer to the first surface coat layer ((second surface coat layer thickness)/(first surface coat layer thickness)) is from 0.4 to 1.3.

In the structure of the present invention, if the thickness ratio of the second surface coat layer to the first surface coat layer ((second surface coat layer thickness)/(first surface coat layer thickness)) is lower than 0.4, the bump or the edge portion have inferior properties including heat conductivity, which decreases the properties including heat conductivity of the entire surface coat layer to result in deterioration in heat insulation properties. On the other hand, if the thickness ratio of the second surface coat layer to the first surface coat layer is higher than 1.3, the second surface coat layer has an excessive thickness, which suppresses the flow of gases such as exhaust gas flowing over the surface coat layer and adversely affects the pressure loss. In addition, turbulent flow is caused, which increases the heat transfer coefficient between gases such as exhaust gas and the structure, adversely affecting the heat insulation performance.

The structure of the present invention is produced using a paint set which includes two paint compositions for forming a surface coat layer on a base that is made of a metal and has a flat portion and at least one of a bump and an edge portion on a surface,

the paint set including a first paint composition for forming a first surface coating layer covering a flat portion and a second paint composition for forming a second surface coat layer covering the at least one of a bump and an edge portion, the first paint composition and the second paint composition each being formed from an amorphous inorganic material and particles of a crystalline inorganic material, the particles of the crystalline inorganic material in the second paint composition having an average particle size smaller than the particles of the crystalline inorganic material in the first paint composition.

In the paint set, the first paint composition and the second paint composition are each formed from an amorphous inorganic material and particles of a crystalline inorganic material, and the particles of the crystalline inorganic material in the second paint composition have an average particle size smaller than the particles of the crystalline inorganic material in the first paint composition. Thus, when a paint composition is applied to a portion such as a bump to form a coating layer that is heated into a second surface coat layer, the melt layer has a high viscosity and thus the portion such as a bump can be entirely coated with the second surface coat layer having a sufficient thickness that is at least similar to the thickness of the first surface coat layer formed on a flat portion. Thus, use of the paint set allows the structure including the first surface coat layer and the second surface coat layer on the surface of the base, as a whole, to provide excellent properties including heat insulation properties and electrical insulation properties.

In the paint set, the particles of the crystalline inorganic material in the second paint composition have an average particle size of from 0.1 to 50 $\mu$m, and the particles of the crystalline inorganic material in the first paint composition have an average particle size of from 1 to 51 $\mu$m.

In the paint set, if the average particle size of the particles of the crystalline inorganic material in the second paint composition, which is from 0.1 to 50 $\mu$m, is smaller than that in the first paint composition, which is from 1 to 51 $\mu$m, the following can be achieved. That is, when a paint composition is applied to a portion such as a bump to form a coating layer that is heated into a second surface coat layer, the coating layer in the molten state can have a high viscosity and the portion such as a bump can be entirely coated with the second surface coat layer having a sufficient thickness that is at least not greatly different from the thickness of the first surface coat layer formed on the flat portion.

In the paint set, the particles of the crystalline inorganic material contained in the second paint composition preferably have an average particle size of from 0.1 to 10 $\mu$m.

If the average particle size of the particles of the crystalline inorganic material in the second paint composition is from 0.1 to 10 $\mu$m, the contact area of the crystalline inorganic material to the amorphous inorganic material in the molten state is larger, and the viscosity of the melt layer is increased. Hence, a surface coat layer having a larger thickness can be formed on the portion such as a bump.

In the paint set, the crystalline inorganic material in the total amount of the amorphous inorganic material and the crystalline inorganic material in the second paint composition constitutes preferably from 5% by weight to less than 20% by weight.

If the crystalline inorganic material in the total amount of the amorphous inorganic material and the crystalline inorganic material in the second paint composition constitutes from 5% by weight to less than 20% by weight, the amount of the amorphous inorganic material per unit volume is in an appropriate range and the collision probability of particles of the crystalline inorganic material is reduced. Thus, the crystalline inorganic material is less likely to coagulate, tends to have an improved dispersibility, and tends to form a uniform film. Thus, a surface coat layer excellent in high-temperature strength, heat insulation properties, and electrical insulation performance can be formed.

In the paint set, the crystalline inorganic material in the total amount of the amorphous inorganic material and the crystalline inorganic material in the first paint composition constitutes preferably from 0.1 to 5% by weight.

In the paint set, the crystalline inorganic material are at least one selected from the group consisting of calcia, magnesia, ceria, alumina, and an oxide of a transition metal.

If the paint set contains any of the above compounds as the crystalline inorganic material, generation of defects such as cracks due to deterioration of the mechanical strength of the surface coat layer, which is formed by applying the paint set to a surface of a base, can be prevented because the crystalline inorganic material have excellent heat resistance and mechanically strengthen the surface coat layer. Especially, an oxide of aluminum, when used as the crystalline inorganic material, contributes to improvement of the electrical insulation properties of an exhaust pipe.

Also, if the paint set contains an oxide of a transition metal as the crystalline inorganic material, the oxide of a transition metal, having a high infrared emissivity, gives a high infrared emissivity to the surface coat layer.

In the paint set, the crystalline inorganic material preferably contains at least one selected from the group consisting of $\alpha$-alumina and yttria-stabilized zirconia.

If the surface coat layer contains any of the above compounds as the crystalline inorganic material, the compound gives better heat resistance, mechanically strengthens the surface coat layer, and contributes to improvement of the electrical insulation properties of the structure.

In the paint set, the amorphous inorganic material contains low melting glass that has a softening point of 300 to 1000°C.

If the amorphous inorganic material in the paint set contains low melting glass that has a softening point of from 300°C to 1000°C, the surface coat layer can be relatively easily formed by forming a coating layer on the surface of the base by coating or the like method, and heating the coating layer.

In the paint set, the low melting glass preferably contains at least one of barium glass, boron glass, strontium glass, alumina-silica glass, soda zinc glass, and soda barium glass.

If the low melting glass containing any of the above materials is used as the amorphous inorganic material in the paint set, a surface coat layer having heat resistance, durability, electrical insulation properties, and low heat conductivity can be formed on the surface of the base.

BRIEF DESCRIPTION OF DRAWINGS

Fig. 1(a) is a cross-sectional view schematically illustrating an example of the structure of the present invention; Fig. 1(b) is an enlarged cross-sectional view of the vicinity of a bump in the structure illustrated in Fig. 1(a); and Fig. 1(c) is an enlarged view of the vicinity of an edge portion in the structure illustrated in Fig. 1(a).

Fig. 2(a) is a cross-sectional view schematically illustrating a member obtained by cutting in half a tubiform body as a base serving as an exhaust system component (hereinafter, such a member is referred to as a half-cut member); Fig. 2(b) is a cross-sectional view schematically illustrating the exhaust system component in the case that the base is a tubiform body; and Fig. 2(c) is an enlarged cross-sectional view of the vicinity of a bump in the half-cut member illustrated in Fig. 2(a).

Fig. 3 is an exploded perspective view schematically illustrating a vehicle engine and an exhaust manifold connected to the vehicle engine which relate to the structure of the present invention.

Fig. 4(a) is an A-A line cross-sectional view of the vehicle engine and the exhaust manifold illustrated in Fig. 3; and Fig. 4(b) is a B-B line cross-sectional view of the exhaust manifold illustrated in Fig. 4(a).

(DETAILED DESCRIPTION)

Hereinafter, the present invention is described in detail. The present invention, however, is not limited by the following description, and appropriate changes may be made without departing from the scope of the present invention.

In the following, the structure of the present invention is described.

The structure of the present invention includes a base that is made of a metal and has a flat portion and at least one of a bump and an edge portion on a surface; and
a surface coat layer that covering the surface of the base,
the surface coat layer including a first surface coat layer covering the flat portion and a second surface coat layer covering the at least one of a bump and an edge portion,
the first surface coat layer and the second surface coat layer being formed from an amorphous inorganic material and particles of a crystalline inorganic material,
the particles of the crystalline inorganic material in the second surface coat layer having an average particle size smaller than the particles of the crystalline inorganic material in the first surface coat layer.

Fig. 1(a) is a cross-sectional view schematically illustrating an example of the structure of the present invention; Fig. 1(b) is an enlarged cross-sectional view of the vicinity of a bump in the structure illustrated in Fig. 1(a); and Fig. 1(c) is an enlarged view of the vicinity of an edge portion in the structure illustrated in Fig. 1(a).

The structure 10 illustrated in Fig. 1(a) includes a base 11 that is made of a metal and has a flat portion 11a, a bump 11b, and an edge portion 11c on its surface; and a surface coat layer 12 formed on the surface of the base 11.

In the structure 10 illustrated in Fig. 1(a), the surface coat layer 12 formed on the surface of the base 11 is formed from an amorphous inorganic material layer 13 and particles 14a and 14b of a crystalline inorganic material dispersed in the amorphous inorganic material layer 13. The structure 10, however, may contain air bubbles or any other substances in the amorphous inorganic material layer 13. The surface coat layer 12 includes a first surface coat layer 12a covering the flat portion 11a and second surface coat layers 12b covering the bump 11b and the edge portion 11c. The particles 14b of the crystalline inorganic material in the second surface coat layers 12b have an average particle size smaller than the particles 14a of the crystalline inorganic material in the first surface coat layer 12a.

The base 11 used in the present invention is a member on which the surface coat layer 12 is to be formed. The base 11 may have a plate shape, a semicylindrical shape, a cylindrical shape, or any other shape, and the cross section thereof may have any peripheral shape such as an oval shape or a polygonal shape.

If the base 11 is a tubiform body, the diameter of the base may not be constant in the longitudinal direction, and the cross-sectional shape of the base perpendicular to the longitudinal direction may not be constant in the longitudinal direction.

The base 11 has the bump 11b and the edge portion 11c formed thereon.

The bump 11 is not particularly limited, and a weld bead or weld spatter generated by welding corresponds to the bump 11b. The base 11 has main faces, each occupying a large area, on the front side and the back side. Typically, the surface coat layer 12 is formed on either one of the main faces, but may be formed on both of the main faces. Also in some cases, a surface coat layer may be required on side face(s) of the base 11 as well as the main face(s) of the base 11. In such a case, the surface coat layer also covers the edge portion 11c. The edge portion exists as a portion to be covered when, for example, part of the exhaust pipe is a double pipe including an inner pipe formed inside and a surface coat layer is formed on the side face(s) of the inner pipe.

In the structure 10 illustrated in Fig. 1(a), the base 11 has the bump 11b and the edge portion 11c, but may have only one of the bump 11b and the edge portion 11c.

The height of the bump 11b is assumed to be from 0.01 to 15 mm, and the width of the bump 11b is assumed to be from 0.01 to 20 mm. The angle of the edge portion 11c in a cross section obtained by cutting the main face of the base 11 perpendicularly is typically 90°. Still, the angle of the edge portion 11c is not limited to 90°, and may be any angle if it is in the range of from 70° to 110°.

The material of the base 11 constituting the structure 10 is, for example, a metal such as stainless steel, steel, iron, and copper, or an alloy such as a nickel alloy (e.g. Inconel, Hastelloy, Invar). The adhesion between the surface coat layer 12 and the base 11 made of a metal can be increased as described below by bringing the coefficient of thermal expansion of the base and that of the amorphous inorganic material layer 13 close to one another.

For good adhesion to the surface coat layer, the base may be subjected to a roughening treatment such as sandblast treatment and chemical agent treatment.

The surface roughness $Rz_{JIS}$ of the surface of the base after the roughening treatment is preferably from 1.5 to 20 $\mu$m. The surface roughness $Rz_{JIS}$ of the above roughened surface is a ten point height of roughness profile defined in JIS B 0601 (2001), with a measurement interval of 10 mm.

If the surface roughness $Rz_{JIS}$ of the roughened surface of the base of the structure is less than 1.5 $\mu$m, the surface area of the base is small, which makes it difficult to achieve sufficient adhesion between the base and the surface coat layer. In contrast, if the surface roughness $Rz_{JIS}$ of the roughened surface of the base of structure is more than 20 $\mu$m, a surface coat layer is not likely to be formed on the surface of the base. This is probably because, if the surface roughness $Rz_{JIS}$ of the roughened surface of the base of the structure is excessively large, the slurry (a paint composition for forming a surface coat layer) does not enter the recessed portions of the irregularities formed on the surface of the base, which forms gaps in these portions.

The surface roughness $Rz_{JIS}$ of the roughened surface of the base of the structure can be measured with HANDYSURF E-35B from TOKYO SEIMITSU CO., LTD. in accordance with JIS B 0601 (2001) with a measurement interval of 10 mm.

In the structure of the present invention, the lower limit for the thickness of the base is preferably 0.2 mm, and more preferably 0.4 mm, while the upper limit is preferably 10 mm, and more preferably 4 mm.

If the thickness of the base of the structure is smaller than 0.2 mm, the strength of the structure is insufficient. If the thickness of the base of the structure is greater than 10 mm, the weight of the structure is large, and such a structure could not be easily mounted on a vehicle such as a passenger car, being unsuitable for practical use.

As for the crystalline inorganic material to be dispersed in the amorphous inorganic material layer 13 forming the surface coat layer 12, the first surface coat layer 12a and the second surface coat layers 12b may or may not contain the same material.

The particles 14a and 14b of a crystalline inorganic material contain at least one selected from the group consisting of calcia, magnesia, ceria, alumina, and an oxide of a transition metal.

Examples of the oxide of a transition metal include zirconia, yttria, niobium oxide, titania, chrome oxide, manganese oxide, iron oxide, copper oxide, cobalt oxide, and chrome oxide.

Specific examples of the inorganic material containing zirconia include yttria-stabilized zirconia, CaO-stabilized zirconia, MgO-stabilized zirconia, zircon, and CeO-stabilized zirconia.

In particular, alumina and yttria-stabilized zirconia which have excellent heat resistance and excellent corrosion resistance are preferred.

In the structure of the present invention, the particles 14b of the crystalline inorganic material in the second surface coat layers 12b have an average particle size smaller than the particles 14a of the crystalline inorganic material in the first surface coat layer 12a.

The average particle size of the particles 14b of the crystalline inorganic material in the second surface coat layers 12b is from 0.1 to 50 $\mu$m, and preferably from 0.1 to 10 $\mu$m.

If the particles 14b of the crystalline inorganic material have an average particle size of from 0.1 to 50 $\mu$m, the following can be achieved. That is, when a material is applied to the bump 11b and the edge portion 11c and heated to form a melt layer, the melt layer has a higher viscosity than the melt layer formed by the same process as the above on the flat portion 11a. Thus, the resulting second surface coat layers 12b can have a thickness not greatly different from the thickness of the first surface coat layer 12a formed on the flat portion.

If the particles 14b of the crystalline inorganic material contained in the second surface coat layers 12b have an average particle size of smaller than 0.1 μm, the particle size of the particles 14b of the crystalline inorganic material is excessively small, and thus the surface area of the crystalline inorganic material in the melt layer increases. The melt layer containing such particles 14b of the crystalline inorganic material has excessively high viscosity, failing to form the surface coat layer 12 having a uniform thickness. If the particles 14b of the crystalline inorganic material have an average particle size of larger than 50 μm, the particle size of the particles 14b of the crystalline inorganic material is excessively large, and thus the surface area of the crystalline inorganic material in the melt layer is excessively small. The melt layer containing such particles 14b of the crystalline inorganic material has excessively low viscosity, and is likely to flow. As a result, the thickness of the resulting second surface coat layers 12b is small.

The particles 14b of the crystalline inorganic material constitute preferably from 5% by weight to less than 20% by weight in the second surface coat layers 12b.

If the particles 14b of the crystalline inorganic material constitute lower than 5% by weight in the second surface coat layers 12b, which is too low a percentage by weight, the melt layer has a low viscosity and thus is less likely to have a sufficient thickness. As a result, the second surface coat layers 12b are less than 0.4 times as thick as the first surface coat layer 12a. If the particles 14b of the crystalline inorganic material in the second surface coat layers 12b constitute 20% by weight or higher, the collision probability of particles of the crystalline inorganic material is high. As a result, the crystalline inorganic material tends to coagulate and is thus less likely to form a uniform film. Thus, properties including heat insulation performance tend to have local variations.

The average particle size of the particles 14a of the crystalline inorganic material in the first surface coat layer 12a is 1 to 51 μm. If the particles 14a of the crystalline inorganic material have an average particle size within such a range, the following can be achieved. That is, when a melt layer is formed on the flat portion 11a, the melt layer has a lower viscosity than the melt layers formed by the same process on the bump 11b and the edge portion 11c. Since the melt layer on the flat portion 11a is formed on a flat surface, the melt layer is less likely to flow. Accordingly, the first surface coat layer 12a formed on the flat portion 11a can have a desired thickness.

The average particle size of the particles 14a of the crystalline inorganic material in the first surface coat layer 12a is preferably from more than 10 μm to 51 μm.

If the particles 14a of the crystalline inorganic material contained in the first surface coat layer 12a have an average particle size of 10 μm or smaller, the particle size of the particles 14a of the crystalline inorganic material is excessively small, and thus the surface area of the crystalline inorganic material in the melt layer increases. The melt layer containing such particles 14a of the crystalline inorganic material has excessively high viscosity, forming the first surface coat layer 12a having an excessive thickness. If the particles 14a of the crystalline inorganic material have an average particle size of larger than 51 μm, the particle size of the particles 14a of the crystalline inorganic material is excessively large, and thus the volume of the amorphous inorganic material per unit volume is large. The melt layer containing such particles 14a of the crystalline inorganic material has excessively low viscosity, and is likely to flow. As a result, the thickness of the resulting first surface coat layer 12a is small.

The average particle size of the particles 14a of the crystalline inorganic material in the first surface coat layer 12a is preferably from 1.1 to 500 times, more preferably from 10 to 300 times, as large as the average particle size of the particles 14b of the crystalline inorganic material in the second surface coat layers 12b.

The particles 14a of the crystalline inorganic material constitute preferably from 0.1 to 5% by weight in the first surface coat layer 12a.

If the particles 14a of the crystalline inorganic material constitute higher than 5% by weight in the first surface coat layer 12a, the following is caused. That is, when a paint composition is prepared, the crystalline inorganic material constitutes a large amount in the paint composition and the paint composition thereby has a high viscosity. In such a situation, if a coating film is formed on the flat portion to form a melt layer by the same process as in the case of the paint composition for forming a coating film on the bump and the edge portion, the first surface coat layer has a coarse surface roughness and gases such as exhaust gas flowing over the first surface coat layer cause turbulent flow. As a result, the heat transfer coefficient between the gases such as exhaust gas and the structure increases, which adversely affects the heat insulation properties. If the particles 14a of the crystalline inorganic material constitute lower than 0.1% by weight, the heat resistance is reduced and the first surface coat layer peels off.

Since the average particle size of the particles of the crystalline inorganic material in the second surface coat layers 12b is smaller than that in the first surface coat layer 12a, the viscosity of the coating layer in the molten state, obtained by applying the second coating composition for forming the second surface coat layer and firing the composition, is high. Hence, the second surface coat layers 12b on the bump 11b and the edge portion 11c are not likely to be thin. As a result, the thickness of the second surface coat layers 12b do not greatly differ from the thickness of the first surface coat layer 12a.

The first surface coat layer 12a preferably has a thickness of from 50 to 1000 $\mu$m, and more preferably from 100 to 750 $\mu$m. The second surface coat layers 12b each preferably have a thickness that is in a ratio of from 0.4 to 1.3 relative to the first surface coat layer 12a.

If the first surface coat layer 12a has a thickness of smaller than 50 $\mu$m, the thickness of the whole surface coat layer 12 is excessively small, and thus the heat insulation performance decreases, failing to raise the temperature of the base sufficiently. If the first surface coat layer 12a has a thickness of larger than 1000 $\mu$m, the thickness of the whole surface coat layer 12 is excessively large. In this case, the temperature of the contact surface between the surface coat layer 12 and the base 11 tends to be greatly different from the temperature of the surface exposed to the air when the structure undergoes thermal shock, leading to easy breakage of the surface coat layer 12.

The amorphous inorganic material constituting the surface coat layer 12 of the structure contains low melting glass that has a softening point of 300°C to 1000°C. The amorphous inorganic material as used herein can be low melting glass having a softening point within the above range both in the case of forming the first surface coat layer 12a and in the case of forming the second surface coat layers 12b.

For forming the second surface coat layers 12b, formation of melt layers with a higher viscosity than that of the melt layer for the first surface coat layer 12a is required. Thus, an amorphous inorganic material having a higher viscosity among amorphous inorganic materials having a softening point within the above range may be used. More preferably, the viscosity of the melt layer is adjusted by changing the average particle size of the particles of the crystalline inorganic material to be contained in the amorphous inorganic material.

The low melting glass is not particularly limited, but preferably contains at least one of barium glass, boron glass, strontium glass, alumina-silica glass, soda zinc glass, and soda barium glass.

The low melting glass may contain a single kind or multiple kinds of glass as described above.

If the low melting glass has a softening point in the range of from 300°C to 1000°C, the surface coat layer 12 having excellent adhesion to the base can be easily formed on the base made of a metal by applying the molten low melting glass (i.e. performing the coating) to the surface of the base (metal material), and heating and firing the molten glass.

If the low melting glass has a softening point of lower than 300°C which is excessively low as a softening point, the layer for forming the surface coat layer under heat is molten, for example, to easily flow and to be less likely to form a layer having a uniform thickness. In contrast, if the low melting glass has a softening point of higher than 1000°C, it is necessary to set the temperature for the heating at a very high temperature, and the heating may deteriorate the mechanical properties of the base.

The softening point can be measured by the method in accordance with JIS R 3103-1:2001 using, for example, an automatic measuring apparatus of glass softening and strain points (SSPM-31) from OPT Corp.

Here, also in the case that a semicylindrical base or a cylindrical base is used for the structure of the present invention, the surface coat layer 12 (the surface coat layer 12a and the surface coat layers 12b) is formed on portions of the base corresponding to the flat portion 11a and at least one of the bump 11b and the edge portion 11c in the structure 10 illustrated in Fig. 1. As described above, the surface coat layer 12 may be formed on both faces of the base 11.

Even in the case that the surface coat layer 12 is formed on both faces of the base 11, the first surface coat layer 12a preferably has a thickness of from 50 to 1000 $\mu$m.

Next, the method for producing the structure of the present invention is described.

First, the paint set used in production of the structure of the present invention is described.

The paint set contains two paint compositions for forming a surface coat layer on a base that is made of a metal and has a flat portion and at least one of a bump and an edge portion on its surface.

Specifically, the paint set includes a first paint composition for forming a first surface coating layer covering the flat portion and a second paint composition for forming a second surface coat layer covering the at least one of a bump and an edge portion, the first paint composition and the second paint composition each contain an amorphous inorganic material and particles of a crystalline inorganic material, and the particles of the crystalline inorganic material in the second paint composition have an average particle size smaller than the particles of the crystalline inorganic material in the first paint composition.

The paint set can be used in production of the structure of the present invention. Here, the use of the paint set is not limited to production of the structure, and the paint set may be used in formation of a coating film or any other process.

The properties (e.g. kind, material, thickness, shape), the bumps, the edge portions, and the like conditions of the base to which the paint set is applied can be the same as those described for the structure of the present invention.

First, the second paint composition is described.

The second paint composition for forming the second surface coating layers covering a portion such as a bump contains an amorphous inorganic material and particles of a crystalline inorganic material, and may also contain other substances such as a dispersion medium and an organic binder.

The crystalline inorganic material in the second paint composition is a material for forming the second surface coat layers of the structure described above, and therefore can be the same as the particles of the crystalline inorganic material contained in the second surface coat layers. The kind and other conditions of the crystalline inorganic material have already been described above for the structure, and are not described again here. The particles of the crystalline inorganic material in the second paint composition have an average particle size smaller than the particles of the crystalline inorganic material in the first paint composition.

The crystalline inorganic material in the second paint composition after subjected to wet grinding eventually have an average particle size of from 0.1 to 50 $\mu$m, and preferably from 0.1 to 10 $\mu$m.

If the average particle size of the particles of the crystalline inorganic material in the second paint composition is within the range of from 0.1 to 50 $\mu$m, the following can be achieved. That is, when a material is applied to the bump and the edge portion and heated to form a melt layer, the melt layer has a higher viscosity than the melt layer formed on the flat portion by the same process. Thus, the resulting second surface coat layers formed on the portion such as a bump can have a similar thickness not greatly different from the first surface coat layer formed on the flat portion.

If the particles of the crystalline inorganic material contained in the second paint composition have an average particle size of smaller than 0.1 $\mu$m, the particle size of the particles of the crystalline inorganic material is excessively small, and thus the surface area of the particles of the crystalline inorganic material in the melt layer increases. The melt layer containing such particles 14b of the crystalline inorganic material has excessively high viscosity, failing to form a surface coat layer having a uniform thickness. If the particles of the crystalline inorganic material in the second paint composition have an average particle size of larger than 50 $\mu$m, the particle size of the particles of the crystalline inorganic material is excessively large, and thus the surface area of the particles of the crystalline inorganic material in the melt layer is excessively small. The melt layer containing such particles of the crystalline inorganic material has excessively low viscosity, and is likely to flow. As a result, the thickness of the resulting second surface coat layers is small.

The crystalline inorganic material in the total amount of the amorphous inorganic material and the crystalline inorganic material in the second paint composition constitutes preferably from 5% by weight to less than 20% by weight.

Here, the percentage by weight of the particles of the crystalline inorganic material in the total amount of the crystalline inorganic material and the amorphous inorganic material in the first paint composition and the percentage by weight of the particles of the crystalline inorganic material in the total amount of the crystalline inorganic material and the amorphous inorganic material in the second paint composition respectively correspond to the percentage by weight of the crystalline inorganic material in the first surface coat layer and the percentage by weight of the crystalline inorganic material in the second surface coat layer of the above mentioned structure of the present invention.

Since the second paint composition contains substances such as a dispersion medium as well as the amorphous inorganic material and the particles of the crystalline inorganic material in the second paint composition, the percentage by weight of the particles of the crystalline inorganic material in the second paint composition, in some cases, needs to be represented by a percentage by weight of the particles of the crystalline inorganic material in the weight of the whole paint composition. In this case, the percentage by weight is represented as the concentration of the particles of the crystalline inorganic material in the second paint composition. Also, if the percentage by weight of the first paint composition is represented by a concentration, the concentration refers to the percentage by weight of the particles of the crystalline inorganic material in the weight of the whole paint composition.

The concentration of the crystalline inorganic material in the weight of the whole second paint composition is preferably from 2 to 9% by weight, and more preferably from 3 to 5% by weight.

The properties (e.g. kind, material) and the like conditions of the amorphous inorganic material can be the same as those described for the structure of the present invention, and are therefore not described again here. In the structure, the amorphous inorganic material is formed into an amorphous layer through coating, heating, and melting, whereas in preparation of the second paint composition, the amorphous inorganic material is used in the form of powder. To prepare the second paint composition, the materials are mixed first, and the mixed materials are subjected to wet grinding. Here, the particle size of the powder of an amorphous inorganic material used is adjusted to an appropriate particle size, and after the mixing, the powder is made to have a desired particle size through the wet grinding.

As described above, since the amorphous inorganic material is to be formed into a layer on the surface of the base through coating, firing, and melting, the particle size of the amorphous inorganic material is not required to be exactly controlled. The particles of the amorphous inorganic material, however, need to be uniformly dispersed in the paint composition.

From this viewpoint, the amorphous inorganic material for the second paint composition after the wet grinding eventually has an average particle size of from 0.1 to 100 $\mu$m, and more preferably from 1 to 20 $\mu$m. If the average particle size is in the range of from 1 to 20 $\mu$m, the particles tend to be uniformly dispersed because, supposedly, the influence of the electricity charged on the surface of the particles is small.

Examples of the dispersion medium include water and organic solvents such as methanol, ethanol, and acetone. The blending ratio of the dispersion medium to the powder of the amorphous inorganic material in the second paint composition is not particularly limited, but is preferably, for example, from 50 to 150 parts by weight for each 100 parts by weight of the powder of the amorphous inorganic material. This is because such a ratio can give a viscosity suitable for applying the paint composition to the base.

Examples of the organic binder that can be mixed into the paint composition include polyvinyl alcohol, methyl cellulose, ethyl cellulose, and carboxymethyl cellulose. These may be used alone or in combination.

Also, the dispersion medium and the organic binder(s) may be used in combination.

Next, the first paint composition is described.

The first paint composition for forming the first surface coating layer covering a flat portion contains an amorphous inorganic material and particles of crystalline inorganic material, and may also contain other substances such as a dispersion medium and an organic binder.

The crystalline inorganic material in the first paint composition is a material for forming the first surface coat layer of the structure described above, and therefore can be the same as the crystalline inorganic material contained in the second surface coat layer. The kind and other conditions of the crystalline inorganic material have already been described above for the structure, and are not described again here. The particles of the crystalline inorganic material in the first paint composition have an average particle size larger than the particles of the crystalline inorganic material in the second paint composition.

The crystalline inorganic material in the first paint composition after subjected to wet grinding eventually have an average particle size of from 1 to 5 $\mu$m, and preferably from more than 10 $\mu$m to 51 $\mu$m.

The percentage by weight of the particles of the crystal material in the total amount of the amorphous inorganic material and the crystalline inorganic material in the first paint composition may be determined by the same method as in the case of the second paint composition.

The particles of the crystalline inorganic material in the total amount of the amorphous inorganic material and the crystalline inorganic material in the first paint composition constitute preferably from 0.1 to 5% by weight.

If the percentage by weight of the particles of the crystalline inorganic material in the total amount of the amorphous inorganic material and the crystalline inorganic material in the first coat layer paint composition is higher than 5% by weight, the following is caused. That is, when the first paint composition is prepared, the first paint composition has a high viscosity. Thus, the first surface coat layer has a coarse surface roughness and gases such as exhaust gas flowing over the first surface coat layer cause turbulent flow. As a result, the heat transfer coefficient between the gases such as exhaust gas and the structure increases, which adversely affects the heat insulation performance. If the percentage by weight of the particles of the crystalline inorganic material is lower than 0.1% by weight, the resulting first surface coat layer has a reduced heat resistance and the first surface coat layer thereby peels off.

The concentration of the particles of the crystalline inorganic material contained in the whole first paint composition is preferably from 0 to 0.05% by weight.

The properties (e.g. kind, material) and the like conditions of the amorphous inorganic material can be the same as those described for the structure of the present invention, and are therefore not described again here. In the structure, the amorphous inorganic material is formed into an amorphous layer through coating, heating, and melting, whereas in preparation of the first paint composition, the amorphous inorganic material is used in the form of powder. To prepare the first paint composition, the materials are mixed first, and the mixed materials are subjected to wet grinding. Here, the particle size of the powder of an amorphous inorganic material used is adjusted to an appropriate particle size, and after the mixing, the powder is made to have a desired particle size through the wet grinding.

As described above, since the amorphous inorganic material is to be formed into a layer on the surface of the base through coating, firing, and melting, the particle size of the amorphous inorganic material is not required to be exactly controlled. The particles of the amorphous inorganic material, however, need to be uniformly dispersed in the paint composition for forming the surface coat layer.

From this viewpoint, the amorphous inorganic material in the first paint composition after the wet grinding eventually has an average particle size of from 0.1 to 100 $\mu$m, and more preferably from 1 to 20 $\mu$m. If the average (5) In the paint set used in the production of the structure of the present invention, the first paint composition and the second paint composition each contain an amorphous inorganic material and particles of a crystalline inorganic material. The particles of the crystalline inorganic material in the second paint composition have an average particle size smaller than the particles of the crystalline inorganic material in the first paint composition. Thus, the structure of the present invention can be favorably manufactured by applying the two paint compositions in the paint set to the flat portion and the portion such as a bump and heating and melting the paint compositions.

(Examples)

Hereinafter, examples showing the structure and the paint set according to the present invention in more detail are described. These examples, however, are not intended to limit the scope of the present invention.

(Example 1)

(1) Preparation of base material

A plate-shaped stainless steel base material (made of SUS430) having a size of 40 mm (length) × 40 mm (width) × 1.5 mm (thickness) including a semicylindrical weld bead having a height of 5 mm, a width of 10 mm, and a length of 40 mm was prepared as a metal base which is the application target. This metal base was subjected to ultrasonic washing in an alcohol solvent, and subsequently subjected to a sandblast treatment so that the surface (on both sides) of the metal base was roughened. The sandblast treatment was carried out using $Al_2O_3$ abrasive grains of #100 for 10 minutes.

With a surface-roughness measuring machine (HANDY SURF E-35B from Tokyo Seimitsu Co., Ltd.), the surface roughness of the metal base was determined with a roughening treatments such as a sandblasting treatment, an etching treatment, and a high-temperature oxidation treatment. These treatments may be performed alone or in combination.

After the roughening treatment, the washing treatment may be further performed.

(2) Process of forming surface coat layer

Materials such as a crystalline inorganic material and an amorphous inorganic material are mixed to prepare a first paint composition for forming a first surface coat layer covering a flat portion, and a second paint composition for forming a second surface coat layer covering at least one of a bump and an edge portion.

Specifically, the first paint composition and the second paint composition are prepared by, for example, preparing powder of the crystalline inorganic material and powder of the amorphous inorganic material each having the predetermined particle size, shape, and the like properties, dry-blending the powder materials in a predetermined blending ratio to prepare a powder mixture, adding water to the mixture, and wet-mixing the mixture with a ball mill.

Here, the blending ratio of the powder mixture to water is not particularly limited, but is preferably 100 parts by weight for each 100 parts by weight of the powder mixture. This is because such a ratio can give a viscosity suitable for applying the paint compositions to the metal base. Also, according to need, the paint compositions for forming surface coat layers may contain additives such as a dispersion medium (e.g. organic solvent) and an organic binder.

The proportions of the powder of the amorphous inorganic material and the powder of the crystalline inorganic material in the first paint composition are naturally different from the proportions of the powder of the amorphous inorganic material and the powder of the crystalline inorganic material in the second paint composition. Although the blending method of the components is not limited, the proportions of the dispersant and the organic binder in the first paint composition are preferably set to the same as those in the second paint composition, whereby the viscosity or the like can be easily adjusted by changing the blending proportion of the powder of the crystalline inorganic material.

(3) Next, the first paint composition is applied to the flat portion of the metal base, and the second paint composition is applied to at least one of the bumps and the edge portions of the metal base.

Specific examples of the method for applying the paint composition include spray coating, electrostatic coating, inkjet printing, transfer with an instrument such as a stamp and a roller, brush coating, and electrodeposition.

(4) Then, the metal base, on which the first paint composition is applied to the flat portion and the second paint composition is applied to at least one of the bumps and the edge portions, is subjected to a firing treatment.

Specifically, the metal base to which the coating composition is applied is dried, heated and fired, so that a first surface coat layer and second surface coating layers are formed.

The firing temperature is preferably not lower than the softening point of the amorphous inorganic material, and is thus preferably from 700°C to 1100°C, although it depends on the kind of the amorphous inorganic material. This is because setting the firing temperature to a temperature not lower than the softening point of the amorphous inorganic material allows the metal base and the amorphous inorganic material to adhere firmly to one another, allowing the first surface coat layer and the second surface coat layers to firmly adhere to the metal base.

The above procedure enables production of an exhaust system component illustrated in Fig. 1 which is an example of the structure of the present invention.

Fig. 2(a) is a cross-sectional view schematically illustrating a member obtained by cutting in half a tubiform body as a base serving as an exhaust system component (hereinafter, such a member is referred to as a half-cut member); Fig. 2(b) is a cross-sectional view schematically illustrating the exhaust system component in the case that the base is a tubiform body; and Fig. 2(c) is an enlarged cross-sectional view of the vicinity of a bump in the half-cut member illustrated in Fig. 2(a).

An exhaust system component 30 illustrated in Fig. 2(b) includes a base 31 that is a tubiform body having the shape of an exhaust pipe, and partly has bumps 31b. The base 31 has, on its inside, a surface coat layer 32 (including a first surface coat layer 32a covering the flat portion and second surface coat layers 32b covering the bumps).

Such an exhaust pipe including the surface coat layer 32 (including the first surface coat layer 32a and the second surface coating layers 32b) formed inside the base 31 has very high heat insulation properties. Therefore, use of this exhaust pipe enables an increase in the temperature to the catalyst activation temperature in a short time from the start of the engine, allowing the catalytic converter to work sufficiently from the start of the engine.

A method for producing such an exhaust system component including a tubiform body as the base and a surface coat layer formed inside the tubiform body is described below.

In the case that the exhaust system component (tubiform body) 30 illustrated in Fig. 2(b) is long, it is not impossible to form a surface coat layer on the entire inner surface, but is difficult. Hence, generally, an exhaust system component (half-cut members) 20 (illustrated in Fig. 2(a)) obtained by cutting in half the tubiform body of the base constituting the exhaust system component is used.

In this case, the exhaust system component 30 including the surface coat layer 32 (including the second surface coat layers 32b) formed on the inner surface of the base 31 is produced by forming the surface coat layer 22 (including the second surface coat layer 22b covering the bumps) on the surface of the base 21, and combining two exhaust system components (half-cut members) 20 together.

Here, a first half-cut member and a second half-cut member obtained by halving a tubiform body are prepared as the metal base. To the surface with a smaller area, i.e., inner surface, of each of the first half-cut member and the second half-cut member, paint compositions are applied. The first half-cut member and the second half-cut member are then subjected to the firing treatment, so that a surface coat layer (including second surface coat layers) is formed on the first half-cut member and the second half-cut member. After that, the first half-cut member and the second half-cut member are bonded to one another by welding, for example, whereby a tubiform body is obtained.

This procedure allows production of an exhaust system component including a tubiform body as the metal base and a surface coat layer formed on the inner surface of the tubiform body.

Hereinafter, the effects of the structure and the paint set according to the present invention are listed.

(1) The structure of the present invention includes a base that is made of a metal and has a flat portion and at least one of a bump and an edge portion on a surface; and a surface coat layer covering the surface of the base, the surface coat layer including a first surface coat layer covering the flat portion and a second surface coat layer covering the at least one of a bump and an edge portion, the first surface coat layer and the second surface coat layer being formed from an amorphous inorganic material and particles of a crystalline inorganic material, the particles of the crystalline inorganic material in the second surface coat layer having an average particle size smaller than the particles of the crystalline inorganic material in the first surface coat layer. Thus, when a paint composition is applied to a portion such as a bump to form a coating layer that is heated into a second surface coat layer, the coating layer in the molten state can have a high viscosity, and the portion such as a bump can be coated with a second surface coat layer having a sufficient thickness that is at least not greatly different from the thickness of the first surface coat layer formed on the flat portion. As a result, the whole structure of the present invention can provide excellent properties including heat insulation properties and electrical insulation properties.

(2) In the structure of the present invention, if at least one of calcia, magnesia, ceria, alumina, and an oxide of a transition metal is contained as the crystalline inorganic material, generation of defects such as cracks due to deterioration of the mechanical strength of the surface coat layer can be prevented because particles of the crystalline inorganic material have excellent heat resistance and mechanically strengthen the surface coat layer. Especially, an oxide of aluminum contributes to improvement of the electrical insulation properties of an exhaust pipe. Also, if the surface coat layer contains an oxide of a transition metal as the crystalline inorganic material, the oxide of a transition metal, having a high infrared emissivity, gives a high infrared emissivity to the surface coat layer, and also contributes to excellent adhesion of the surface coat layer to the base.

(3) In the structure of the present invention, if the average particle size of the particles of the crystalline inorganic material in the second surface coat layer, which is 0.1 to 50 $\mu$m, is smaller than that in the first surface coat layer, which is 1 to 51 $\mu$m, the following can be achieved. That is, when a paint composition is applied to a portion such as a bump to form a coating layer that is heated into a second surface coat layer, the coating layer in the molten state can have a high viscosity and the portion such as a bump can be entirely coated with the second surface coat layer having a sufficient thickness that is not greatly different from the thickness of the first surface coat layer formed on the flat portion.

(4) In the structure of the present invention, if the amorphous inorganic material contains low melting glass that has a softening point of from 300°C to 1000°C, the surface coat layer can be relatively easily formed by forming a coating layer on the surface of the base by coating or the like method, and heating the coating layer.

(5) In the paint set of the present invention, the first paint composition and the second paint composition each contain an amorphous inorganic material and particles of a crystalline inorganic material. The particles of the crystalline inorganic material in the second paint composition have an average particle size smaller than the particles of the crystalline inorganic material in the first paint composition. Thus, the structure of the present invention can be favorably manufactured by applying the two paint compositions in the paint set to the flat portion and the portion such as a bump and heating and melting the paint compositions.

(Examples)

Hereinafter, examples showing the structure and the paint set according to the present invention in more detail are described. These examples, however, are not intended to limit the scope of the present invention.

(Example 1)

(1) Preparation of base material

A plate-shaped stainless steel base material (made of SUS430) having a size of 40 mm (length) $\times$ 40 mm (width) $\times$ 1.5 mm (thickness) including a semicylindrical weld bead having a height of 5 mm, a width of 10 mm, and a length of 40 mm was prepared as a metal base which is the application target. This metal base was subjected to ultrasonic washing in an alcohol solvent, and subsequently subjected to a sandblast treatment so that the surface (on both sides) of the metal base was roughened. The sandblast treatment was carried out using $Al_2O_3$ abrasive grains of #100 for 10 minutes.

With a surface-roughness measuring machine (HANDY SURF E-35B from Tokyo Seimitsu Co., Ltd.), the surface roughness of the metal base was determined with a measurement interval of 10 mm. The results showed that the surface roughness $Rz_{JIS}$ of the metal base material was 8.8 $\mu$m.

A plate-like base was produced by the above treatments.

(2) Preparation of first paint composition for first surface coat layer

K4006A-100M ($Bi_2O_3$-$B_2O_3$ glass, softening point: 770°C) from Asahi Glass Co., Ltd. was prepared as the powder of an amorphous inorganic material. The concentration of the amorphous inorganic material in the whole first paint composition was 38% by weight. The concentration is the proportion of the amorphous inorganic material expressed in percentage in the total weight of the first paint composition which contains materials such as water. The powder of the amorphous inorganic material had an average particle size of 15 $\mu$m.

To the paint composition, $\alpha$-alumina was blended as particles of a crystalline inorganic material. The percentage by weight of the crystalline inorganic material in the total amount of the amorphous inorganic material and the crystalline inorganic material was 1% by weight. The average particle size of the crystalline inorganic material was 30 $\mu$m.

Methyl cellulose from Shin-Etsu Chemical Co., Ltd. (product name: METOLOSE-65SH) was prepared as an organic binder, and blended in an amount that gives a concentration in the whole first paint composition of 0.05% by weight.

In preparation of the first paint composition used in formation of a surface coat layer, water was further added to the first paint composition in an amount that gives a concentration of 7% by weight in the whole first paint composition. The resulting mixture was wet-mixed with a ball mill, whereby a first paint composition was prepared.

(3) Preparation of second paint composition for second surface coat layer

The second paint composition for the second surface coat layer was prepared by the same method as the method for preparing the first paint composition for the first surface coat layer.

As in the case of the first paint composition, K4006A-100M from Asahi Glass Co., Ltd. was used as powder of an amorphous inorganic material, in an amount that gives a concentration of the amorphous inorganic material of 41% by weight in the whole second paint composition. Yttria-stabilized zirconia (YSZ) was blended as a crystalline inorganic material such that the percentage by weight of the YSZ in the total amount of the amorphous inorganic material and the crystalline inorganic material was 10% by weight. The YSZ used had an average particle size of 0.1 $\mu$m.

The application target, properties of the first paint composition (the kind of the crystalline inorganic material, the average particle size of the crystalline inorganic material, the percentage by weight of the crystalline inorganic material, the concentration of the amorphous inorganic material), and the properties of the second paint composition (the kind of crystalline inorganic material, the average particle size of the crystalline inorganic material, the percentage by weight of the crystalline inorganic material, the concentration of the amorphous inorganic material) are shown in Table 1.

The average particle size of the particles of the crystalline inorganic material is the average particle size of the particles of the crystalline inorganic material, before adding the particles to the materials for forming a surface coat layer, measured using Laser Diffraction Particle Size Analyzer (SALD-300V) from Shimadzu Corporation.

(4) Production of structure

A film was applied to the bumps and the edge portions of the base to cover the bumps and the edge portions.
The prepared first paint composition was applied to one main surface and side surfaces of the base by spray coating, and the base was dried at 70°C for 20 minutes in a dryer. The film was then removed. Subsequently, another film was applied to the part other than the bumps and the edge portions. The prepared second paint composition was applied to the surface of the base by the spray coating method, and the base was dried at 70°C for 20 minutes. The film was then removed. Then, the base was heated and fired at 850°C for 90 minutes in the air, and thereby a surface coat layer was formed.

(5) Evaluation of the obtained structure

Measurement of the thickness of the surface coat layer (thickness of the first surface coat layer and the thickness of the second surface coat layers), calculation of the thickness ratio (second surface coat layer thickness/first surface coat layer thickness), and evaluation of the properties of the surface coat layer (film formation evaluation on the flat portion, film formation evaluation on the bumps, surface roughness measurement of the surface coat layer, and the overall evaluation) were performed by the following methods.

(Measurement of thickness)

The thickness of each of the first surface coat layer and the second surface coat layers of the obtained structure was measured using DUALSCOPE MP40 from Fischer Instruments K.K.
The thickness of the second surface coat layers was divided by the thickness of the first surface coat layer, and the resulting value was taken as the thickness ratio.

(Evaluation of film formation on flat portion and bump)

Ten SEM photographs of the interface between the base and the surface coat layer formed on the surface of the base were taken with a scanning electron microscope (Hitachi Chemical Co., Ltd., FE-SEM S-4800). Using the SEM photographs, the structure was evaluated as "failed" if a gap was formed between the surface coat layer and the base and peeling was observed, and evaluated as "passed" if no gap was formed between the base and the surface coat layer.

(Measurement of surface roughness of surface coat layer)

The ten point height of roughness profile $Rz_{JIS}$ was calculated from a roughness curve formed by measuring the surface roughness of the surface coat layer with a surface-roughness measuring machine (HANDYSURF E-35B from TOKYO SEIMITSU CO., LTD.) in accordance with JIS B 0601: 2001, with a measurement interval of 10 mm.

(Overall evaluation)

Based on the evaluation results of the film formation on the flat portion, the film formation on the bumps, and the thickness ratio, a structure to which "passed" was given under all the evaluations was evaluated as an acceptable product, and a structure to which "failed" was given under at least one evaluation was evaluated as a rejected product. Here, the thickness ratio was evaluated using the formula: "heat resistance R $(m^2K/W)$ = thickness t (m)/heat conductivity $\lambda$ (W/m·K)" which shows heat insulation level of the structure. A higher value of the heat resistance R means that the heat insulation level is higher, and the heat resistance R is proportional to the thickness t as shown by the formula. Therefore, the heat insulation level here was evaluated using the thickness t instead of determining the heat resistance R. Now, use of the thickness t instead of determining the heat resistance R is discussed from the viewpoint of the flow of gases. When gases flow over the surface of the structure having bumps and edge portions, the bumps and the edge portions of the structure receive a larger amount of heat from gases than the flat portion per unit area and unit time because the flow of gases is disturbed around the bumps and the edge portions. Accordingly, the heat insulation level of the whole structure increases as the thickness of the layer on the bumps and the edge portions increases, and this phenomenon is easily predictable. An exhaust pipe, one of the uses to which the present invention is applied, is considered to have sufficient heat insulation properties if it has a thickness ratio of at least 0.4. Hence, a thickness ratio of at least 0.4 was evaluated as "passed" in the thickness ratio evaluation.

(Examples 2 to 5)

A surface coat layer was formed in substantially the same manner as in Example 1, except that the kind of the base as the application target, the kind, average particle size, and percentage by weight of the crystalline inorganic material used to produce the paint composition for forming a surface coat layer, and the concentration of the amorphous inorganic material were changed as shown in Table 1.

The application target, properties of the first paint composition (the kind of the crystalline inorganic material, the average particle size of the crystalline inorganic material, the percentage by weight of the crystalline inorganic material, the concentration of the amorphous inorganic material), and the properties of the second paint composition (the kind of crystalline inorganic material, the average particle size of the crystalline inorganic material, the percentage by weight of the crystalline inorganic material, the concentration of the amorphous inorganic material) are shown in Table 1.

(Comparative Examples 1 and 2)

A surface coat layer was formed in substantially the same manner as in Example 1, except that the kind of the base as the application target, the kind, average particle size, and percentage by weight of the crystalline inorganic material used to produce the paint composition for forming a surface coat layer, and the concentration of the amorphous inorganic material were changed as shown in Table 1.

The application target, properties of the first paint composition (the kind of the crystalline inorganic material, the average particle size of the crystalline inorganic material, the percentage by weight of the crystalline inorganic material, the concentration of the amorphous inorganic material), and the properties of the second paint composition (the kind of crystalline inorganic material, the average particle size of the crystalline inorganic material, the percentage by weight of the crystalline inorganic material, the concentration of the amorphous inorganic material) are shown in Table 1.

[Table 1]

| Application target | First paint composition | | | | Second paint composition | | | |
| --- | --- | --- | --- | --- | --- | --- | --- | --- |
| | Crystalline inorganic material | | | Amorphous inorganic material | Crystalline inorganic material | | | Amorphous inorganic material |
| | Kind | Average particle size (μm) | Percentage by weight (wt%) *1 | Concentration (wt%) *2 | Kind | Average particle size (μm) | Percentage by weight (wt%) *1 | Concentration (wt%) *2 |
| Example 1 | Plate | α-alumina | 30 | 1 | 38 | YSZ | 0.1 | 10 | 41 |
| Example 2 | Plate | α-alumina | 20 | 5 | 38 | α-alumina | 10 | 10 | 30 |
| Example 3 | Half-cut member | YSZ*3 | 51 | 1 | 43 | YSZ | 50 | 10 | 37 |
| Example 4 | Cylinder | α-alumina | 30 | 1 | 38 | YSZ | 10 | 5 | 42 |
| Example 5 | Cylinder | α-alumina | 25 | 2 | 38 | α-alumina | 10 | 18 | 35 |
| Comparative Example 1 | Plate | α-alumina | 60 | 10 | 37 | α-alumina | 60 | 10 | 37 |
| Comparative Example 2 | Plate | α-alumina | 0.05 | 10 | 37 | α-alumina | 0.05 | 10 | 37 |

Note: *1 Percentage by weight of crystalline inorganic material: percentage by weight of crystalline inorganic material in total amount of amorphous inorganic material and crystalline inorganic material
*2 Concentration of amorphous inorganic material: percentage by weight of amorphous inorganic material in total amount of paint composition
*3 YSZ: yttria-stabilized zirconia

The following evaluation results were given in Example 1: the thickness of the first surface coat layer: 50 $\mu$m, the thickness of the second surface coat layers: 50 $\mu$m, the thickness ratio (second surface coat layer thickness/first surface coat layer thickness): 1, the film formation on the flat portion: passed, the film formation on the bumps: passed, the surface roughness ($Rz_{JIS}$) of the surface coat layer: 0.7 $\mu$m, and the overall evaluation: passed.

The following evaluation results were given in Example 2: the thickness of the first surface coat layer: 200 $\mu$m, the thickness of the second surface coat layers: 254 $\mu$m, the thickness ratio (second surface coat layer thickness/first surface coat layer thickness): 1.27, the film formation on the flat portion: passed, the film formation on the bumps: passed, the surface roughness ($Rz_{JIS}$) of the surface coat layer: 3 $\mu$m, and the overall evaluation: passed.

The following evaluation results were given in Example 3: the thickness of the first surface coat layer: 1000 $\mu$m, the thickness of the second surface coat layers: 1160 $\mu$m, the thickness ratio (second surface coat layer thickness/first surface coat layer thickness): 1.16, the film formation on the flat portion: passed, the film formation on the bumps: passed, the surface roughness ($Rz_{JIS}$) of the surface coat layer: 0.5 $\mu$m, and the overall evaluation: passed.

The following evaluation results were given in Example 4: the thickness of the first surface coat layer: 200 $\mu$m, the thickness of the second surface coat layers: 220 $\mu$m, the thickness ratio (second surface coat layer thickness/first surface coat layer thickness): 1.1, the film formation on the flat portion: passed, the film formation on the bumps: passed, the surface roughness ($Rz_{JIS}$) of the surface coat layer: 0.7 $\mu$m, and the overall evaluation: passed.

The following evaluation results were given in Example 5: the thickness of the first surface coat layer: 200 $\mu$m, the thickness of the second surface coat layers: 224 $\mu$m, the thickness ratio (second surface coat layer thickness/first surface coat layer thickness): 1.12, the film formation on the flat portion: passed, the film formation on the bumps: passed, the surface roughness ($Rz_{JIS}$) of the surface coat layer: 2 $\mu$m, and the overall evaluation: passed.

The following evaluation results were given in Comparative Example 1: the thickness of the first surface coat layer: 500 $\mu$m, the thickness of the second surface coat layers: 150 $\mu$m, the thickness ratio (second surface coat layer thickness/first surface coat layer thickness): 0.3 (heat insulation properties are insufficient), the film formation on the flat portion: passed, the film formation on the bumps: passed, the surface roughness ($Rz_{JIS}$) of the surface coat layer: 0.3 $\mu$m, and the overall evaluation: failed.

In Comparative Example 2, the particles of the crystalline inorganic material used for the first paint composition and for the second paint composition each had an average particle size of 0.05 $\mu$m which is excessively small. As a result, an applicable paint composition could not be prepared, and thus a coating film was not formed.

Hereinafter, a specific example of the structure of the present invention is described with reference to the drawings.

The structure of the present invention can be used for an exhaust system component used as a member constituting the exhaust system that is connected to the internal combustion engine such as an engine for passenger cars. The form of the exhaust system component described below is the same as the form of the structure described above except that the base is a tubiform body.

Specifically, the structure of the present invention is suitable as, for example, an exhaust manifold.

Hereinafter, the structure of the present invention is described based on an exemplary exhaust manifold connected to the internal engine such as an engine for passenger cars.

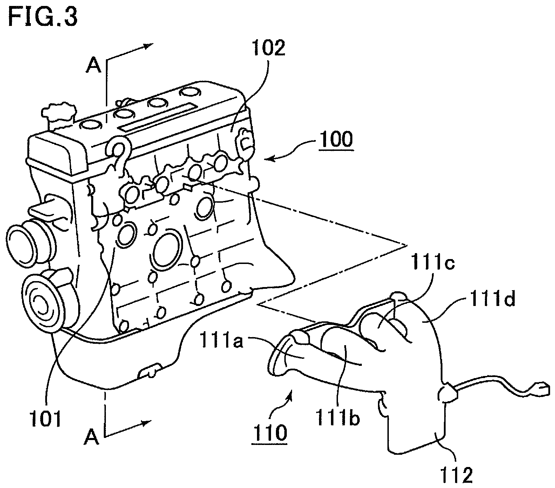

Fig. 3 is an exploded perspective view schematically illustrating a vehicle engine and an exhaust manifold connected to the vehicle engine which relate to the structure of the present invention.

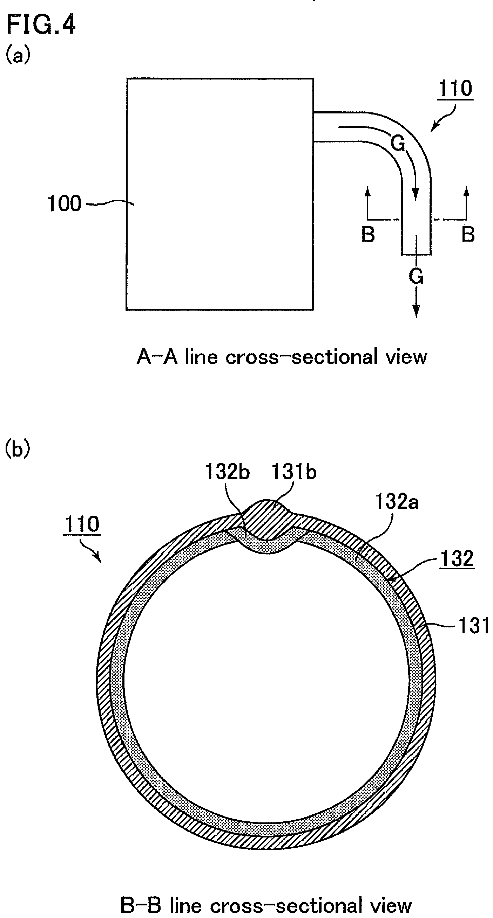

Fig. 4(a) is an A-A line cross-sectional view of the vehicle engine and the exhaust manifold illustrated in Fig. 3; and Fig. 4(b) is a B-B line cross-sectional view of the exhaust manifold illustrated in Fig. 4(a).

As illustrated in Fig. 3 and Fig. 4(a), an engine 100 for passenger vehicles is connected to an exhaust manifold 110 (the structure illustrated in Fig. 1).

The engine 100 includes a cylinder block 101 at the top of which a cylinder head 102 is installed. To one side face of the cylinder head 102, the exhaust manifold 110 is mounted.

The exhaust manifold 110 has a glove-like shape, and includes branch pipes 111a, 111b, 111c, and 111d provided to correspond in number to the cylinders, and a collective portion 112 combining the branch pipes 111a, 111b, 111c, and 111d.

To the exhaust manifold 110, a catalytic converter provided with a catalyst supporting carrier is connected. The exhaust manifold 110 is configured to collect exhaust gas from each cylinder, and send the exhaust gas to a component such as the catalytic converter.

Exhaust gas G (in Fig. 4(a), exhaust gas is indicated by G, and the direction in which the exhaust gas flows is indicated by arrows) discharged from the engine 100 flows into the catalytic converter through the exhaust manifold 110, purified by the catalyst supported by the catalyst supporting carrier, and flows out through a vent.

As illustrated in Fig. 4(b), the exhaust manifold 110 (the structure of the present invention) includes a base made of a metal and the surface coat layer 132 formed on the surface of the base.

In the exhaust manifold 110 (the structure of the present invention) illustrated in Fig. 4(b), the base is a tubiform body, and the surface coat layer 132 is formed on the inner surface of the base.

In the structure (exhaust manifold) of the present invention, the form of the surface coat layer can be the same as that of the surface coat layer of the structure described above.

Fig. 4(b) shows an example in which the form of the surface coat layer 132 included in the exhaust manifold 110 is the same as that of the surface coat layer 12 in the structure 10 illustrated in Fig. 1. The exhaust manifold 110 includes the second surface coat layers 132b on the bumps 131b. Although not illustrated, the amorphous inorganic material includes particles of the crystalline inorganic material dispersed therein.

The structure (exhaust manifold) of the present invention preferably has the surface coat layer on the entire inner surface of the base. This is because the area of the surface coat layer coming into contact with exhaust gases in this case is the maximum, which gives especially good heat resistance. The surface coat layer, however, may be formed on part of the inner surface of the base.

Also in the structure of the present invention, the surface coat layer may be formed on the outer surface, as well as the inner surface, of the base, or may be formed only on the outer surface.

Hereinabove, the structure of the present invention has been described as an exhaust manifold used as an exhaust system component, but the structure of the present invention can be suitably used as, for example, an exhaust pipe, a pipe constituting a catalytic converter, or a turbine housing, as well as an exhaust manifold.

The number of the branch pipes constituting the exhaust manifold is not particularly limited if it is the same as the number of cylinders of the engine. Here, the engine is, for example, a single cylinder engine, a two-cylinder engine, a four-cylinder engine, a six-cylinder engine, or an eight-cylinder engine.

The structure of the present invention described here is the same as the structure of the present invention described based on Fig. 1 except for the shape of the base. Hence, an exhaust system component can be produced in the same manner as in production of the above structure.

In the case of forming the surface coat layer on the inner surface of the base in the structure of the present invention, a base consisting of a first half-cut member and a second half-cut member as described above is preferably used.

The structure of the present invention described here can also achieve the same effects as the effects (1) to (5) of the structure and the paint composition for forming a surface coat layer described based on Fig. 1.

In the structure of the present invention, the surface coat layer may not necessarily be formed on the entire surface of the base.

For example, in the case of using the structure of the present invention as an exhaust pipe, the surface coat layer may be formed on the inner surface of a tubiform body as a base. In the case of forming a surface coat layer on the inner surface of the tubiform body, however, the surface coat layer needs not be formed on the entire inner surface of the tubiform body as a base if it is formed at least on the parts with which exhaust gas directly comes into contact.

The structure of the present invention essentially features a base that is made of a metal and has a flat portion and at least one of a bump and an edge portion on its surface; and a surface coat layer that covers the surface of the base and is formed from an amorphous inorganic material and particles of a crystalline inorganic material, the surface coat layer including a first surface coat layer covering the flat portion and a second surface coat layer covering the at least one of a bump and an edge portion, the particles of a crystalline inorganic material in the second surface layer having an average particle size smaller than the particles of a crystalline inorganic material in the first surface layer.

The desired effects can be achieved by appropriately combining this essential feature with the above-described various configurations (e.g. form of the surface coat layer, the shape of the base, exhaust manifold).

REFERENCE SIGNS LIST

| | |
|---|---|
| 10, 20, 30 | Structure |
| 11, 21, 31, 120 | Base |
| 11a | Flat portion |
| 11b, 21b, 31b, 131b | Bump |
| 11c | Edge portion |
| 12, 22, 32, 132 | Surface coat layer |
| 12a, 32a | First surface coat layer |
| 12b, 22b, 32b, 132b | Second surface coat layer |
| 13 | Layer of amorphous inorganic material |
| 14a, 14b | Particles of crystalline inorganic material |
| 100 | Vehicle engine |
| 110 | Exhaust manifold |

**Claims**

1. A structure comprising:

   a base that is made of a metal and has a flat portion and at least one of a bump and an edge portion on a surface; and
   a surface coat layer covering the surface of the base,
   the surface coat layer including a first surface coat layer covering the flat portion and a second surface coat layer covering the at least one of a bump and an edge portion,
   the first surface coat layer and the second surface coat layer being formed from an amorphous inorganic material and particles of a crystalline inorganic material,
   the particles of the crystalline inorganic material in the second surface coat layer having an average particle size smaller than the particles of the crystalline inorganic material in the first surface coat layer,
   wherein the particles of the crystalline inorganic material in the second surface coat layer have an average particle size of from 0.1 to 50 μm, and the particles of the crystalline inorganic material in the first surface coat layer have an average particle size of from 1 to 51 μm,
   wherein the crystalline inorganic material contains at least one selected from the group consisting of calcia, magnesia, ceria, alumina, and an oxide of a transition metal,
   wherein the amorphous inorganic material contains low melting glass that has a softening point of from 300°C to 1000°C,
   wherein the bump is formed by at least one of a weld bead and a weld spatter.

2. The structure according to claim 1,
   wherein the particles of the crystalline inorganic material in the second surface coat layer have an average particle size of from 0.1 to 10 μm.

3. The structure according to claim 1 or 2,
   wherein the crystalline inorganic material constitutes from 5% by weight to less than 20% by weight in the second surface coat layer.

4. The structure according to any one of claims 1 to 3,
   wherein the crystalline inorganic material contains at least one selected from the group consisting of α-alumina and yttria-stabilized zirconia.

5. The structure according to claim 1,
   wherein the low melting glass contains at least one of barium glass, boron glass, strontium glass, alumina-silica glass, soda zinc glass, and soda barium glass.

6. The structure according to any one of claims 1 to 5,
   wherein the structure has a thickness ratio of the second surface coat layer to the first surface coat layer ((second surface coat layer thickness)/(first surface coat layer thickness)) of from 0.4 to 1.3.


**Patentansprüche**

1. Struktur, umfassend:

   eine Basis, die aus einem Metall hergestellt wurde, und einen flachen Abschnitt und mindestens eines, das ausgewählt wird aus einer Ausbuchtung und einem Randabschnitt, auf einer Oberfläche aufweist; und
   eine Oberflächenüberzugsschicht, welche die Oberfläche der Basis überzieht, wobei die Oberflächenüberzugsschicht eine erste Oberflächenüberzugsschicht, die den flachen Abschnitt überzieht, und eine zweite Oberflächenüberzugsschicht, die mindestens eines, ausgewählt aus einer Ausbuchtung und einem Randabschnitt überzieht, umfasst,
   wobei die erste Oberflächenüberzugsschicht und die zweite Oberflächenüberzugsschicht aus einem amorphen anorganischen Material und Teilchen eines kristallinen anorganischen Materials gebildet werden,
   wobei die Teilchen des kristallinen anorganischen Materials in der zweiten Oberflächenüberzugsschicht eine mittlere Teilchengröße aufweisen, die kleiner ist als die der Teilchen des kristallinen anorganischen Materials in der ersten Oberflächenüberzugsschicht.

wobei die Teilchen des kristallinen anorganischen Materials in der zweiten Oberflächenüberzugsschicht eine mittlere Teilchengröße von 0,1 bis 50 $\mu$m aufweisen und die Teilchen des kristallinen anorganischen Materials in der ersten Oberflächenüberzugsschicht eine mittlere Teilchengröße von 1 bis 51 $\mu$m aufweisen,

wobei das kristalline anorganische Material mindestens eines umfasst, das aus der Gruppe ausgewählt wird, die aus Calciumoxid ("calcia"), Magnesiumoxid, Cerdioxid, Aluminiumoxid und einem Oxid eines Übergangsmetalls besteht,

wobei das amorphe anorganische Material niedrig schmelzendes Glas umfasst, das einen Erweichungspunkt von 300°C bis 1000°C aufweist,

wobei die Ausbuchtung durch mindestens eines, ausgewählt aus einer Schweißnaht und einem Schweißspritzer gebildet wird.

2. Struktur gemäß Anspruch 1, wobei die Teilchen des kristallinen anorganischen Materials in der zweiten Oberflächenüberzugsschicht eine mittlere Teilchengröße von 0,1 bis 10 $\mu$m aufweisen.

3. Struktur gemäß Anspruch 1 oder 2, wobei das kristalline anorganische Material 5 Gew.-% bis weniger als 20 Gew.-% in der zweiten Oberflächenüberzugsschicht ausmacht.

4. Struktur gemäß einem der Ansprüche 1 bis 3, wobei das kristalline anorganische Material mindestens ein Material umfasst, das aus der Gruppe bestehend aus $\alpha$-Aluminiumoxid und Yttriumoxid-stabilisiertem Zirkonoxid ausgewählt wird.

5. Struktur gemäß Anspruch 1, wobei das niedrigschmelzende Glas mindestens ein Glas umfasst, das ausgewählt ist aus Bariumglas, Borglas, Strontiumglas, Aluminosilikatglas, Natronzinkglas und Natronbariumglas.

6. Struktur gemäß einem der Ansprüche 1 bis 5, wobei die Struktur ein Dickenverhältnis der zweiten Oberflächenüberzugsschicht zur ersten Oberflächenüberzugsschicht (Dicke der zweiten Oberflächenüberzugsschicht)/(Dicke der ersten Oberflächenüberzugsschicht) von 0,4 bis 1,3 aufweist.

## Revendications

1. Structure comprenant :

- une base qui est faite d'un métal et comporte une partie plate et au moins une parmi une bosse et une partie de bord sur une surface ; et
- une couche de revêtement de surface recouvrant la surface de la base,
- la couche de revêtement de surface comprenant une première couche de revêtement de surface recouvrant la partie plate et une seconde couche de revêtement de surface recouvrant la au moins une parmi une bosse et une partie de bord,
- la première couche de revêtement de surface et la seconde couche de revêtement de surface étant formées d'un matériau inorganique amorphe et de particules d'un matériau inorganique cristallin,
- les particules du matériau inorganique cristallin dans la seconde couche de revêtement de surface ayant une taille de particule moyenne inférieure aux particules du matériau inorganique cristallin dans la première couche de revêtement de surface,
- dans laquelle les particules du matériau inorganique cristallin dans la seconde couche de revêtement de surface ont une taille de particule moyenne de 0,1 à 50 $\mu$m, et les particules du matériau inorganique cristallin dans la première couche de revêtement de surface ont une taille de particule moyenne de 1 à 51 $\mu$m,
- dans laquelle le matériau inorganique cristallin contient au moins un choisi dans le groupe consistant en oxyde de calcium, magnésie, oxyde de cérium, alumine et un oxyde d'un métal de transition,
- dans laquelle le matériau inorganique amorphe contient un verre à bas point de fusion qui a un point de ramollissement de 300°C à 1000°C,
- dans laquelle la bosse est formée par au moins un parmi un cordon de soudure et une projection de soudure.

2. Structure selon la revendication 1,
dans laquelle les particules du matériau inorganique cristallin dans la seconde couche de revêtement de surface ont une taille de particule moyenne de 0,1 à 10 $\mu$m.

3. Structure selon la revendication 1 ou 2,

dans laquelle le matériau inorganique cristallin constitue de 5 % en poids à moins de 20 % en poids dans la seconde couche de revêtement de surface.

4. Structure selon l'une quelconque des revendications 1 à 3,
dans laquelle le matériau inorganique cristallin contient au moins un choisi dans le groupe consistant en une α-alumine et un oxyde de zirconium stabilisé par un oxyde d'yttrium.

5. Structure selon la revendication 1,
dans laquelle le verre à bas point de fusion contient au moins un parmi un verre au baryum, un verre au bore, un verre au strontium, un verre d'alumine-silice, un verre au zinc-soude et un verre au baryum-soude.

6. Structure selon l'une quelconque des revendications 1 à 5,
dans laquelle la structure a un ratio d'épaisseurs de la seconde couche de revêtement de surface par rapport à la première couche de revêtement de surface ((épaisseur de seconde couche de revêtement de surface) / (épaisseur de première couche de revêtement de surface)) de 0,4 à 1,3.

# FIG.1

(a)

(b)

(c)

FIG.2

(a)

(b)

(c)

# FIG.3

# FIG.4

## (a)

A-A line cross-sectional view

## (b)

B-B line cross-sectional view

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008069383 A
- JP 2009133213 A
- JP 2009133214 A
- EP 2474719 A1